# EUROPEAN PATENT SPECIFICATION

(11) **EP 2 596 588 B1**
(45) Date of publication and mention of the grant of the patent: **31.03.2021**
(21) Application number: 11810276.3
(22) Date of filing: 19.07.2011
(51) Int. Cl.: H04W 74/08, H04B 7/04

(54) **MEDIA ACCESS TECHNIQUES FOR MULTIPLE USER TRANSMISSIONS**
MEDIENZUGANGSVERFAHREN FÜR ÜBERTRAGUNGEN AN MEHRERE BENUTZER
TECHNIQUES D'ACCÈS AU SUPPORT POUR TRANSMISSIONS À PLUSIEURS UTILISATEURS

(30) Priority: 20.07.2010 US 839504
(43) Date of publication of application: 29.05.2013
(73) Proprietor: Intel Corporation, Santa Clara, CA 95054 (US)
(72) Inventor: GONG, Michelle X., Sunnyvale California 94087 (US); XIA, Liangfu Wayne, Shanghai 200241 (CN)
(74) Representative: HGF
(86) International application number: PCT/US2011/044528
(87) International publication number: WO 2012/012420

(56) References cited:
- EP-A2- 2 198 664
- WO-A1-2009/157892
- US-A1- 2006 013 177
- US-A1- 2007 190 942
- US-A1- 2007 258 508
- US-A1- 2010 111 223

## Description

### BACKGROUND

Media access techniques are employed by wireless networks to provide devices with access to a communications medium. For example, wireless local area networks (WLANs) defined by the Institute of Electrical and Electronic Engineers (IEEE) 802.11 standards may employ a protection procedure to reserve a wireless medium for pending data transmissions.

The protection procedure may employ frame exchange technique in which a transmitting device and a receiving device may exchange request to send (RTS) and clear to send (CTS) frames with each other. Alternatively, the devices may exchange short data (e.g., QoS-Null) and acknowledgment (ACK) frames. These frames allow for network allocation vector (NAV) information (which indicates transmission duration) to be distributed at both the transmitting and the receiving devices. After completing such an exchange, the transmitting device may then send a transmission to the receiving device.

In a downlink multi-user transmission, a transmitting device (e.g., an access point) sends a data transmission to multiple receiving devices (e.g., STAs). However, current media access techniques typically employ protection procedures that work for only one user at any time.

EP 2198664 A2 relates to a transmitting apparatus, a receiving apparatus, a system and a method of performing multi-user transmission to a plurality of other transmission ends, wherein a request for transmission is broadcast to said plurality of other transmission ends, and the request is provided with a Medium Access Control MAC frame which includes a list of at least two identifications of receiving ends which are requested to reply to the request.

WO 2009/157892 A1 describes a method and apparatus including multicasting a medium reservation message, receiving responses to the medium reservation message and determining if a ratio of the received responses to an expected number of responses exceeds a threshold The invention is defined by the appended claims.

### BRIEF DESCRIPTION OF THE DRAWINGS

In the drawings, like reference numbers generally indicate identical, functionally similar, and/or structurally similar elements. The drawing in which an element first appears is indicated by the leftmost digit(s) in the reference number. The present invention will be described with reference to the accompanying drawings, wherein:
**FIG. 1** is a diagram showing an exemplary operational environment;
**FIGS. 2-12** are diagrams showing exemplary exchanges between wireless communications devices;
**FIG. 13** is a diagram of an exemplary logic flow; and
**FIGs. 14** and **15** are diagrams of exemplary device implementations.

### DETAILED DESCRIPTION

Embodiments provide techniques involving media access. For instance, a transmitting device may have data to transmit to destination devices. The transmitting device selects one or more of the destination devices and initiates an exchange with each of one or more of the selected device(s). Based on an outcome of such exchange(s), the transmitting device may choose between sending a data transmission and initiating a backoff interval. The data transmission may have data for one or more of the destination devices.

Reference throughout this specification to "one embodiment" or "an embodiment" means that a particular feature, structure, or characteristic described in connection with the embodiment is included in at least one embodiment. Thus, appearances of the phrases "in one embodiment" or "in an embodiment" in various places throughout this specification are not necessarily all referring to the same embodiment.

The techniques described herein are discussed in the context of IEEE 802.11 wireless local area networks (WLANs). However, these techniques are not limited to such networks. Thus, these techniques may be employed in a variety of network types. Examples of such networks include Institute of Electrical and Electronic Engineers (IEEE) 802.15 wireless personal area networks (WPANs), such as Bluetooth networks. Also, these techniques may be employed with WiGig networks. WiGig networks are 60 GHz networks defined by the Wireless Gigabit Alliance (such as in the version 1.0 WiGig Specification). Further exemplary networks include IEEE 802.16 wireless metropolitan area networks (WMANs), such as WiMAX networks. WiMAX networks may support directional transmissions through beamforming capabilities. Also, the techniques described herein may be employed in millimeter wave (e.g., 60 GHz) networks. Further, these techniques may be employed in various cellular and/or satellite networks. These networks are provided as examples, and not as limitations. Accordingly, the techniques described herein may be employed with other network types.

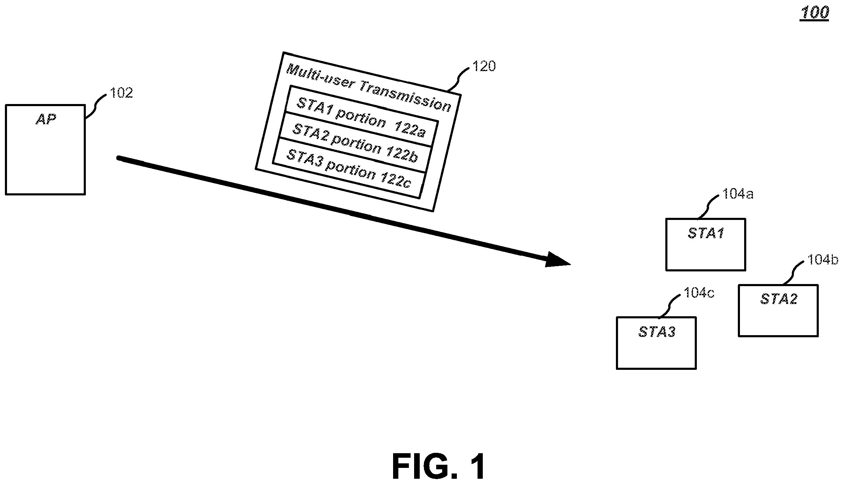

**FIG.** 1 is a diagram of an exemplary operational environment 100 in which the techniques described herein may be employed. Embodiments, however, are not limited to this environment. The environment of **FIG. 1** includes multiple wireless communications devices. More particularly, these devices include an access point (AP) 102, and multiple wireless stations (STAs) 104a-c. These STAs are also identified in **FIG. 1** as STA1, STA2, and STA3.

The devices of **FIG. 1** may employ multi-user transmissions. A multi-user transmission contains data (e.g., information associated with one or more applications) for multiple recipient devices. For example, **FIG. 1** shows AP 102 sending a downlink (DL) multi-user transmission 120 to STA1, STA2, and STA3. In particular, **FIG. 1** shows multi-user transmission 120 including a portion 122a intended for STA1, a portion 122b intended for STA2, and a portion 122c intended for STA3. Each of portions 122a-c may include a header part and a payload part. For instance, in embodiments, each portion may comprise a data frame directed to the corresponding recipient device.

In embodiments, transmissions (such as multi-user transmission 120) may be transmitted using multiple-input multiple output (MIMO) and/or spatial division multiple access (SDMA) techniques. For instance, transmission 120 may be a multiple user MIMO (MU-MIMO) transmission. Accordingly, each of AP 102 and STAs 104a-c may have one or more antennas. Moreover, such transmissions may be formatted in accordance with orthogonal frequency division multiplexing (OFDM) and/or orthogonal frequency division multiple access (OFDMA) techniques. Embodiments, however, are not limited to these examples.

As described herein, a transmitting device (e.g., an access point) may have data to send to multiple destination devices (e.g., multiple STAs). Embodiments provide media access techniques that handle such situations. Further, embodiments provide techniques for handling errors that may occur with such media access techniques. Such techniques may be employed in the environment of **FIG. 1****.** Embodiments, however, are not limited to this context.

In embodiments, a transmitting device may select one or more of its multiple destination devices with which to engage in an exchange. For example, a transmitting device may select all of its destination devices. Alternatively, a transmitting device may select a single destination device. The transmitting device may then engage in an exchange with one or more of the selected destination devices.

The exchange may involve the transmitting device sending a ready to send (RTS) frame and awaiting reception of a corresponding clear to send (CTS) frame from the selected destination device. Alternatively, the exchange may involve the transmitting device sending a short or empty data frame (e.g., a QoS-Null frame), and awaiting a corresponding acknowledgment (ACK) frame from the selected destination device. Embodiments, however, are not limited to these exemplary frames.

Based on the outcome of such exchange(s), the transmitting device may then send a transmission including data intended for various combinations (e.g., one or more) of the destination devices. Alternatively, based on the outcome of such exchange(s), the transmitting device may forego sending such a transmission. For example, the transmitting device may wait for a backoff time (e.g., an exponential backoff time). Following this backoff time, the transmitting device may attempt this again. More particularly, the transmitting device may once again select destination device(s), engage in exchange(s) with the selected device(s), and potentially send a transmission based on the outcome of such exchange(s).

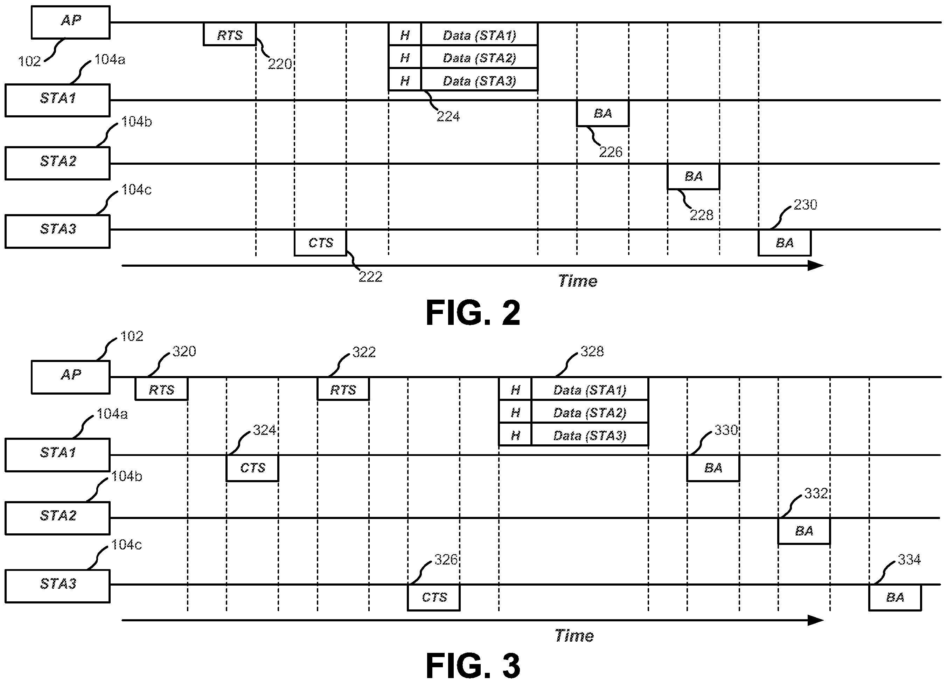

Exemplary techniques are described below with reference to **FIGs. 2-13****.** These drawings illustrate interactions among the devices of **FIG. 1****.** However, such exchanges are not limited to the context of **FIG. 1****.**

**FIG. 2** provides an example in which a single destination device is selected. In particular, AP 102 selects STA3 and sends to it an RTS frame 220. In response, STA3 sends a corresponding CTS frame 222. After successfully receiving CTS frame 222, AP 102 sends a data transmission 224. As shown in **FIG. 2****,** data transmission 224 includes data for each destination device (i.e., each of STA1-STA3). Additionally, data transmission 224 may include header (H) portions that each correspond to one of the data portions.

If a destination device successfully receives data transmission 224, it sends a block acknowledgment (BA) to AP 102. For instance, **FIG. 2** shows STA1, STA2, and STA3 sending BAs 226, 228, and 230, respectively.

**FIG. 3** provides an example in which multiple destination devices are selected. In particular, AP 102 selects STA1 and STA3. Thus, AP 102 sends an RTS frame 320 to STA1, and an RTS frame 322 to STA3. In response, STA1 and STA3 send corresponding CTS frames 324 and 326, respectively. AP 102 successfully receives these CTS frames. Thus, AP 102 sends a data transmission 328. **FIG. 3** shows that data transmission 328 includes data for each destination device (i.e., each of STA1-STA3). Additionally, data transmission 328 may include header (H) portions that each correspond to one of the data portions. In response to data transmission 328, **FIG. 3** shows STA1, STA2, and STA3 sending BAs 330, 332, and 334 to AP 102.

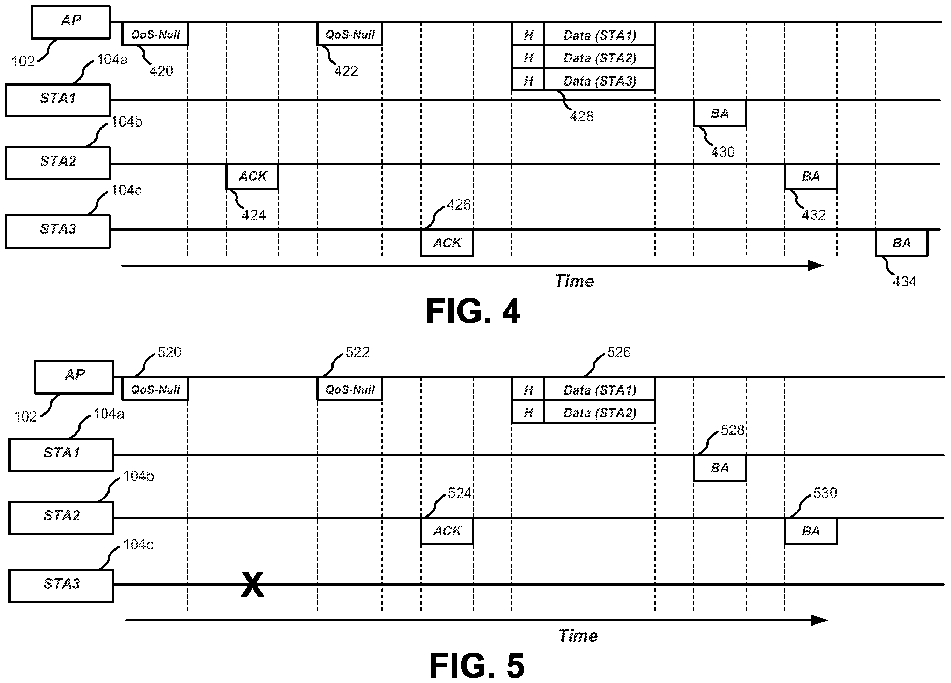

As described herein, exchanges may employ messages other than CTS and RTS frames. For example, **FIG. 4** provides an example in which QoS-Null and ACK frames are exchanged. More particularly, in **FIG. 4****,** STA2 and STA3 are selected by AP 102. Based on this selection, QoS-Null and ACK frames 420-426 are exchanged. In turn, AP 102 sends a data transmission 428 to STA1-STA3. Further, BAs 430, 432, and 434 are received from STA1, STA2, and STA3, respectively.

As described above, a transmitting device (e.g., an AP) may select one or more destination devices with which to perform an exchange. This selection may be made randomly. Also, this selection may be made deterministically (e.g., the transmitting device may select all destination devices). Further, in embodiments, the transmitting device may select destination devices that have been flagged.

For instance, a transmitting device may flag a destination device when it has not received an expected response from the device. Examples of such expected responses include, but are not limited to, exchange responses (e.g., CTS frames, ACK frames, etc.) and acknowledgment messages (e.g., BA frames).

In embodiments, the transmitting device may select flagged destination devices. From this, the transmitting device may initiate exchanges with such selected destination device(s). As described above, this may involve sending an RTS frame or a QoS_Null frame to the selected destination device(s).

Thus, in embodiments, a transmitting device may perform exchanges with a destination device when the transmitting device has experienced communications with it. This may advantageously streamline exchange processes associated with multi-user transmissions by focusing on potentially problematic destination devices.

As described herein, embodiments provide various error handling techniques. Such techniques may be employed, for example, when failure(s) occur with one or more destination device exchanges (e.g. RTS/CTS or QoS-Null/ACK exchanges).

In a first error handling technique, a transmitting device initiates an exchange (e.g., an RTS/CTS exchange, a QoS-Null/ACK exchange, etc.) with each of one or more selected destination devices. In accordance with the first technique, the transmitting device will proceed with its pending data transmission as long as it receives an exchange response from at least one of the selected destination devices. However, this data transmission may omit data that is designated for any non-responding destination devices. Moreover, the transmitting device may flag any non-responding destination devices.

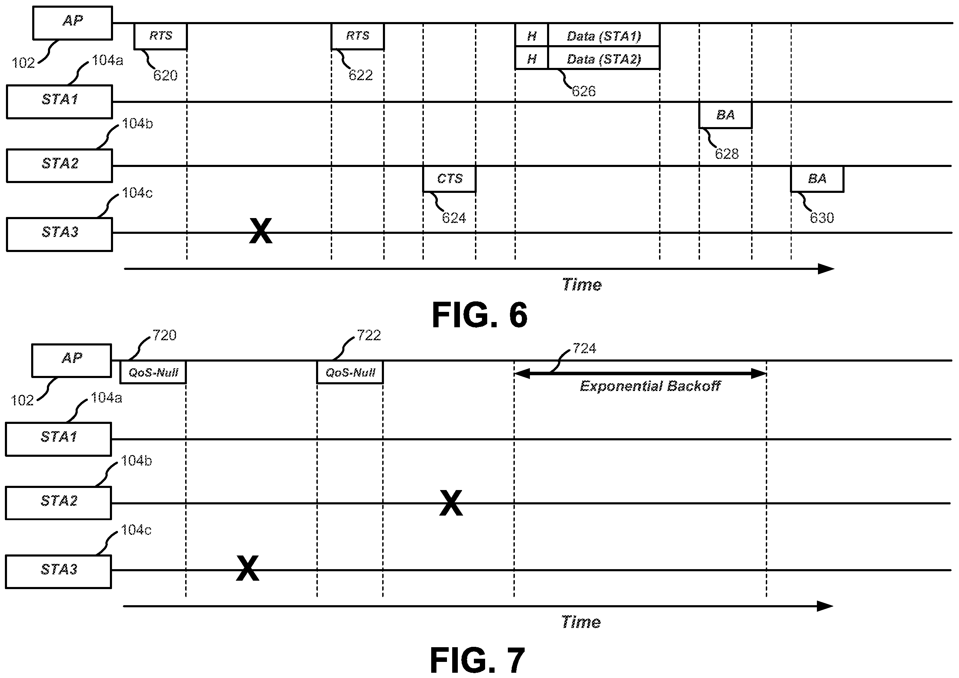

**FIGs. 5** and **6** provide examples of this technique. In **FIG. 5****,** AP 102 selects STA3 and STA2. Accordingly, **FIG. 5** shows AP 102 sending a QOS-Null frame 520 to STA3 and a QOS-Null frame 522 to STA2. Although, AP 102 receives a responsive ACK 524 from STA2, AP 102 fails to receive a response from STA3. In **FIG. 5****,** an "X" aligned with STA3 indicates this failure.

Based on this outcome, **FIG. 5** shows AP 102 sending a multi-user transmission 526. This transmission includes data designated for STA1 and STA2. However, data for STA3 is omitted because AP 102 failed to receive a response from STA3. In response to transmission 526, **FIG. 5** shows STA1 and STA2 sending BA 628 and BA 630, respectively. Further, in the example of **FIG. 5****,** AP 102 may flag STA3 because it did not respond to QOS-Null frame 520. Thus, for a future data transmission, AP 102 may select STA3 for an exchange.

**FIG. 6** provides an example that is similar to **FIG. 5****.** However, **FIG. 6** employs RTS and CTS frames instead of QOS-Null frames and ACK frames. In particular, **FIG. 6** shows AP 102 sending RTS frames 620 and 622 to STA3 and STA2, respectively. Despite this, AP 102 only receives a responsive CTS frame 624 from STA2. Based on this, AP 102 sends a data transmission 626 directed to STA1 and STA2. In response to this data transmission, STA1 and STA2 send BA 628 and BA 630 to AP 102. Also, as in the example, of **FIG. 5****,** AP 102 may flag STA3 to be selected for an exchange associated with a future data transmission.

**FIG. 7** provides a further example of the first error handling technique in which all of the selected destination devices have not responded. In this example, AP 102 selects STA3 and STA2. Accordingly, AP 102 sends a QoS-Null frame 720 to STA3, and a QoS-Null frame 722 to STA2. However, AP 102 fails to receive a response to either of these frames. In **FIG. 7****,** this failure is indicated by an "X" aligned with STA3 and an "X" aligned with STA2.

Based on this, **FIG. 7** shows that AP 102 does not proceed with a data transmission. This is because AP 102 did not receive any responses from the selected destination devices. Thus, AP 102 waits for an exponential backoff interval 724. Following this backoff interval, AP 102 may attempt this again.

In a second error handling technique, a transmitting device initiates an exchange (e.g., an RTS/CTS exchange, a QoS-Null/ACK exchange, etc.) with one or more of its selected destination devices. In accordance with the second technique, the transmitting device foregoes its pending data transmission if any one of these selected destination devices fails to respond. This may involve the transmitting device waiting for a backoff interval (e.g., an exponential backoff interval). Moreover, the transmitting device may flag any non-responding destination devices.

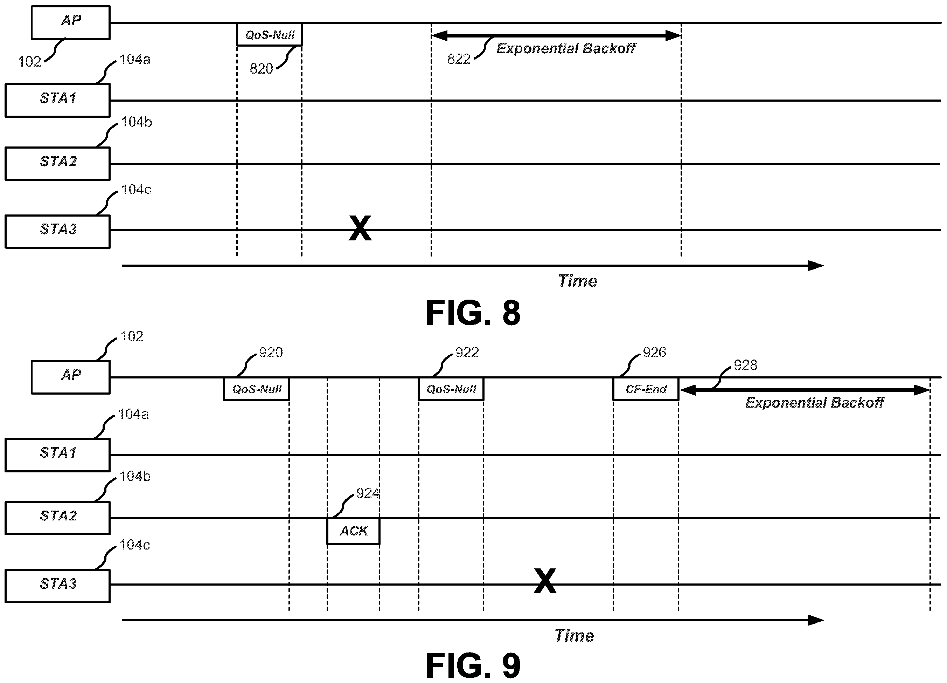

**FIG. 8** provides an example of the second error handling technique. In this example, AP 102 selects STA3, and sends it a QoS-Null frame 820. However, AP 102 fails to receive a corresponding response from STA3. As a result, AP 102 waits for an exponential backoff interval 822. Following backoff interval 822, AP 102 may attempt this again.

**FIG. 9** provides a further example of the second error handling technique. In this example, AP 102 selects STA2 and STA3. Accordingly, AP 102 sends a QoS-NULL frame 920 to STA2 and a QoS-Null frame 922 to STA3. AP 102 receives an ACK frame 924 from STA2. However, AP 102 fails to receive a response from STA 3. Accordingly, AP 102 foregoes sending a data transmission. This involves AP 102 transmitting a CF-End frame 926, and then waiting for an exponential backoff interval 928. Following backoff interval 928, AP 102 may attempt this again.

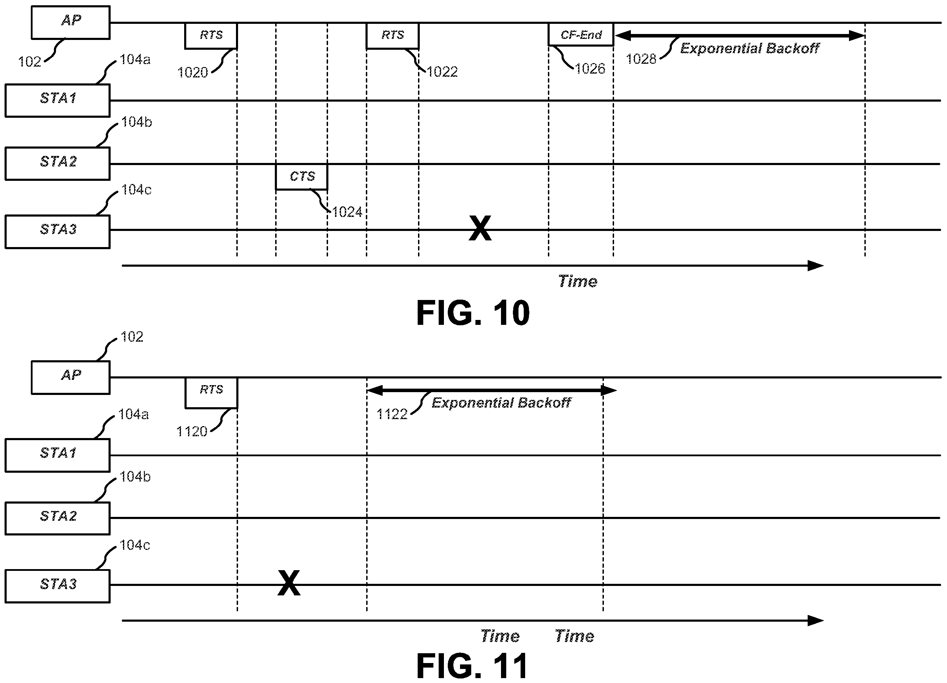

Yet a further example of the second error handling technique is shown in **FIG. 10****.** This example is similar to the example of **FIG. 9****.** However, the example of **FIG. 10** employs RTS and CTS frames instead of QOS-Null frames and ACK frames. In particular, **FIG. 10** shows AP 102 sending RTS frames 1020 and 1022 to STA2 and STA3. However, AP 102 only receives a responsive CTS frame 1024 from STA2. Accordingly, AP 102 sends a CF-End frame 1026 and waits from an exponential backoff interval 1028. Following backoff interval 1028, AP 102 may attempt this again.

In a third error handling technique, a transmitting device selects one or more destination devices to perform an exchange with (e.g., an RTS/CTS exchange, a QoS-Null/ACK exchange, etc.). In accordance with the third technique, the transmitting device foregoes its pending data transmission if the transmitting device fails to receive an exchange response (e.g., a CTS frame, an ACK frame, etc.) from a first of the selected destination device(s). This may involve the transmitting device waiting for a backoff interval (e.g., an exponential backoff interval).

However, if the transmitting device receives an exchange response from the first destination device, then the transmitting device initiates exchanges with any remaining selected destination device(s). Following this, the transmitting device may send its pending data transmission. However, this data transmission may omit data that is designated for any non-responding destination devices. Moreover, in the third technique, the transmitting device may flag any non-responding destination devices.

**FIG. 11** provides an example of the third error handling technique. In this example, AP 102 selects one or more destination devices. These selected device(s) include STA3. Based on this, AP 102 seeks a first exchange with STA3 by sending an RTS frame 1120. However, AP 102 fails to receive a corresponding response from STA 3. Accordingly, AP 102 foregoes its pending data transmission and waits for an exponential backoff interval 1122.

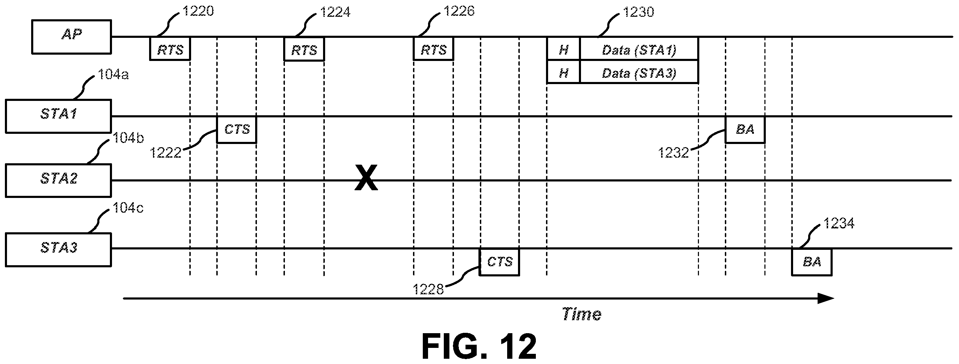

**FIG. 12** provides a further example of the third error handling technique. In this example, AP 102 selects destination devices STA1, STA2, and STA3. Based on this, AP 102 seeks a first exchange with STA1 by sending an RTS frame 1220. In response, AP 102 receives a corresponding CTS frame 1222 from STA1.

As a result of this response, AP 102 may proceed. Thus, **FIG. 12** shows AP 102 sending an RTS frame 1224 to STA2. However, AP 102 fails to receive a corresponding response from STA2. Despite this, AP 102 proceeds because it received a response from STA1 (the first destination device). Therefore, AP 102 sends an RTS frame 1226 to STA3. In response, AP 102 receives a CTS frame 1228 from STA3.

Based on these exchanges, AP 102 sends a data transmission 1230. This transmission includes data designated for STA1 and STA3. However, data for STA2 is omitted because AP 102 failed to receive a response from STA2. In response to transmission 1230, **FIG. 12** shows STA1 and STA3 sending BA 1232 and BA 1234, respectively.

In the examples of **FIGs. 2-12** a transmitting device initiates exchanges and await responses from selected destination devices. A transmitting device may employ various time intervals in waiting for an exchange response. For instance, in embodiments involving IEEE 802.11 networks, a transmitting device may wait for a priority inter-frame space (PIFS) time interval. If a response is not received within this time interval, then the transmitting device may considers the exchange a failure. Embodiments, however, are not limited to this example. Moreover, embodiments are not limited to the examples **of** **FIGs. 2-12****.**

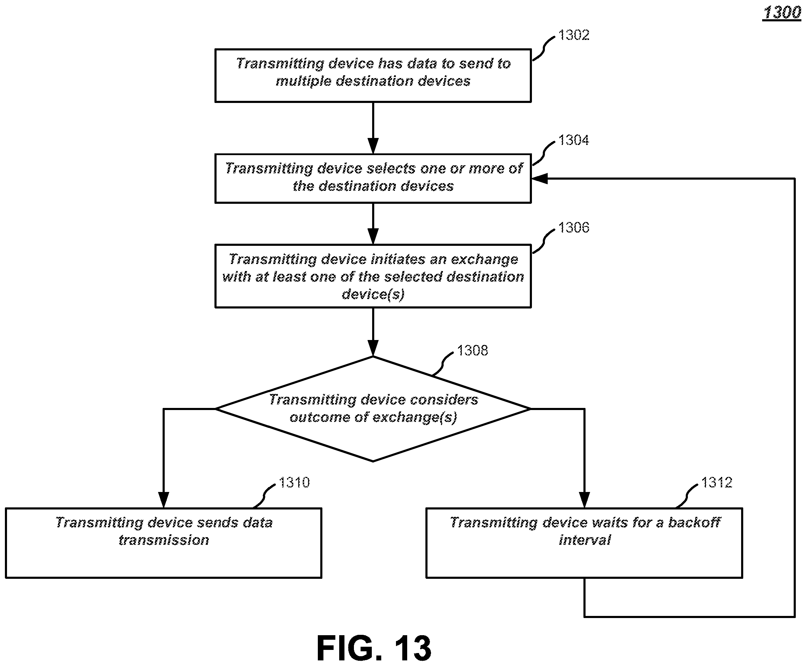

**FIG. 13** illustrates an embodiment of a logic flow. In particular, **FIG. 13** illustrates a logic flow 1300, which may be representative of the operations executed by one or more embodiments described herein. These operations may be employed in the environment of **FIG. 1****.** Embodiments, however, are not limited to this context. Although **FIG. 13** shows a particular sequence, other sequences may be employed. Also, the depicted operations may be performed in various parallel and/or sequential combinations.

At a block 1302, a wireless communications device (also referred to as the transmitting device) has data to send to multiple destination wireless communications devices. In embodiments, the transmitting device may be an AP and the multiple destination devices may be STAs. Embodiments, however, are not limited to this context.

Accordingly, at a block 1304, the transmitting device selects one or more of the destination devices. This selection may be based on various factors. For instance, all of the destination devices may be selected. Alternatively, one or more particular destination devices may be selected. For instance, the transmitting device may select one or more destination devices that have been previously unresponsive to the access point (e.g., flagged destination device(s)).

At a block 1306, the transmitting device initiates an exchange with at least one of the selected destination device(s). This may involve the transmitting device seeking an exchange response from a selected destination device. For instance, this may involve the transmitting device sending a message (e.g., an RTS frame, a QoS-Null frame, etc.) to a selected destination device, and awaiting a corresponding response message (e.g., a CTS frame, an ACK frame, etc.) from the selected destination device.

In embodiments, the block 1306 may involve the transmitting device initiating an exchange with each of the selected destination devices. However, in further embodiments, block 1306 may involve the transmitting device initiating an exchange with less than all the selected destination devices. For example, the destination device may bypass subsequent exchange(s) if an earlier initiated exchange (e.g., a first initiated exchange) results in the transmitting device failing to receive a response message.

At a block 1308, the transmitting device determines an outcome of block 1306. Based on the outcome, the transmitting device chooses whether to send a data transmission at a block 1310, or to wait for a backoff interval (e.g., an exponential backoff interval) at a block 1312. This choosing at block 1310 may be in accordance with the techniques described herein.

For instance, in accordance with the first error handling technique described herein, the transmitting device may choose to send a data transmission when block 1306 results in the transmitting device receiving a response from at least one of the one or more selected destination devices. Thus, if the transmitting device fails to receive an exchange response from all of the selected destination device(s), then the transmitting device waits for a backoff interval at block 1312.

In accordance with the second error handling technique described herein, the transmitting device may choose to send a data transmission (at block 1310) when block 1306 results in the transmitting device receiving an exchange response from all of the selected destination devices. Thus, if the transmitting device fails to receive an exchange response from any of the selected destination device(s), then the transmitting device waits for a backoff interval at block 1312.

However, the transmitting device may choose to send a data transmission (at block 1310) when block 1306 results in the transmitting device receiving a response from a first destination device in which a response is sought. Thus, if the transmitting device fails to receive an exchange response from this first destination device, then the transmitting device waits for a backoff interval at block 1312.

As described above, the transmitting device may send a data transmission at a block 1310. This data transmission may be a wireless MIMO and/or SDMA transmission. The data transmission may include data for one or more destination devices. However, in embodiments, the data transmission may omit data for any non-responding destination devices.

Also, as described above, the transmitting device may wait for a backoff interval at block 1312. The duration of this backoff interval may be determined by the transmitting device. **FIG. 13** shows that following the backoff interval, operation may return to block 1304. Thus, the transmitting device may again pursue sending a data transmission to the destination device(s).

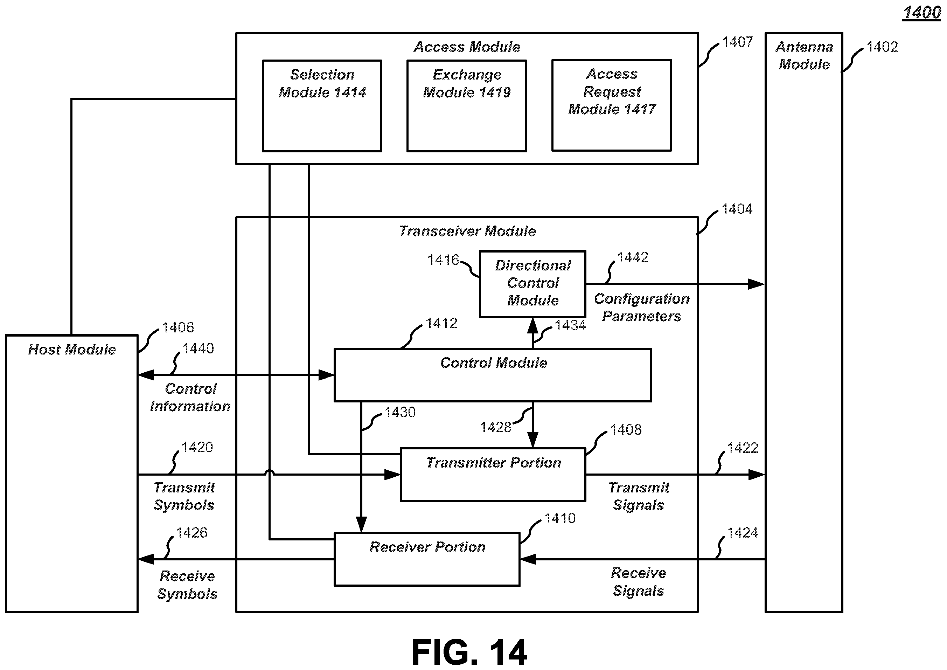

**FIG. 14** is a diagram of an implementation 1400 that may be included in a wireless device, such as a STA and/or an access point. As shown in **FIG. 14****,** implementation 1400 may include an antenna module 1402, a transceiver module 1404, a host module 1406, and an access module 1407. These elements may be implemented in hardware, software, or any combination thereof.

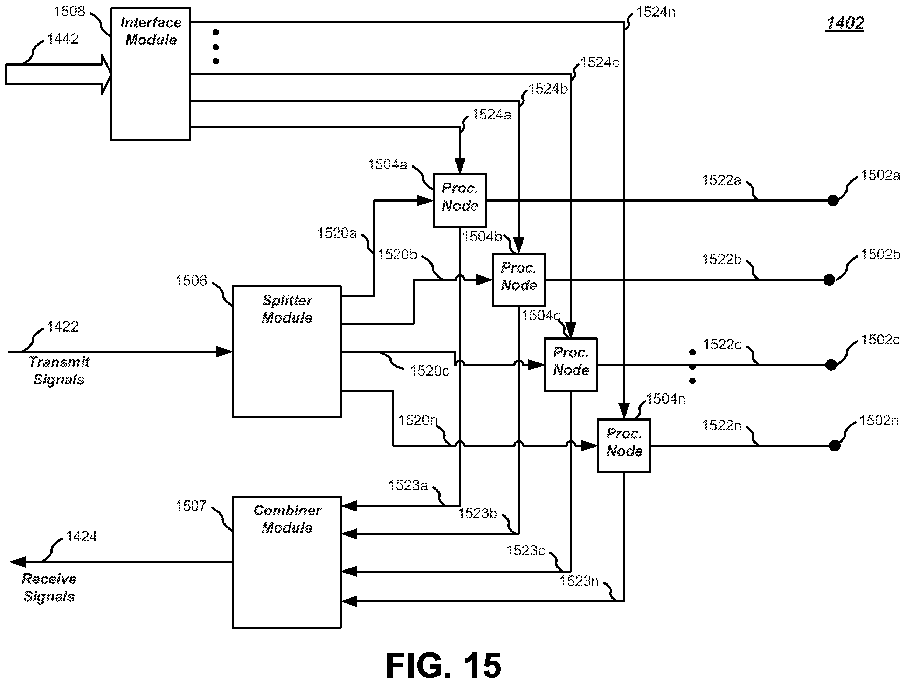

Antenna module 1402 provides for the exchange of wireless signals with remote devices. Moreover, antenna module 1402 may transmit wireless signals through one or more directional radiation patterns. Thus, antenna module 1402 may include multiple antennas and/or multiple radiating elements (e.g., phased-array radiating elements). Details regarding exemplary implementations of antenna module 1402 are described below with reference to **FIG. 15****.**

**FIG. 14** shows that transceiver module 1404 includes a transmitter portion 1408, a receiver portion 1410, a control module 1412, and a directional control module 1416. These elements may be implemented in hardware, software, or any combination thereof.

Transceiver module 1404 provides an interface between antenna module 1402 and host module 1406. For instance, transmitter portion 1408 within transceiver module 1404 receives symbols 1420 from host module 1406 and generates corresponding signals 1422 for wireless transmission by antenna module 1402. This may involve operations, such as modulation, amplification, and/or filtering. However, other operations may be employed.

Conversely, receiver portion 1410 within transceiver module 1404 obtains signals 1424 received by antenna module 1402 and generates corresponding symbols 1426. In turn, receiver portion 1410 provides symbols 1426 to host module 1406. This generation of symbols 1426 may involve operations, including (but not limited to) demodulation, amplification, and/or filtering.

The symbols exchanged between host module 1406 and transceiver module 1404 may form messages or information associated with one or more protocols, and/or one or more user applications. Thus, host module 1406 may perform operations corresponding to such protocol(s) and/or user application(s). Exemplary protocols include various media access, network, transport and/or session layer protocols. Exemplary user applications include telephony, messaging, e-mail, web browsing, content (e.g., video and audio) distribution/reception, and so forth.

In addition, host module 1406 may exchange control information 1440 with transceiver module 1404. This control information may pertain to the operation and status of transceiver module 1404. For instance, control information 1440 may include directives that host module 1406 sends to transceiver module 1404. Such directives may establish operating parameters/characteristics for transceiver module 1404. Also control information 1440 may include data (e.g., operational status information) that host module 1406 receives from transceiver module 1404.

As described above, transmitter portion 1408 generates signals 1422 from symbols 1420, and receiver portion 1410 generates symbols 1426 from received signals 1424. To provide such features, transmitter portion 1408 and receiver portion 1410 may each include various components, such as modulators, demodulators, amplifiers, filters, buffers, upconverters, and/or downconveters. Such components may be implemented in hardware (e.g., electronics), software, or any combination thereof.

Signals 1422 and 1424 may be in various formats. For instance, these signals may be formatted for transmission in IEEE 802.11, IEEE 802.15, WiGig, and/or IEEE 802.16 networks. However, embodiments are not limited to these exemplary networks may be employed.

Control module 1412 governs various operations of transceiver module 1404. For instance, control module 1412 may establish operational characteristics of transmitter portion 1408 and receiver portion 1410. Such characteristics may include (but are not limited to) timing, amplification, modulation/demodulation properties, and so forth. As shown in **FIG. 14** the establishment of such characteristics may be implemented in directives 1428 and 1430, which are sent to transmitter portion 1408 and receiver portion 1410, respectively.

In addition, control module 1412 governs the employment of directional transmission and reception features. In particular, **FIG. 14** shows control module 1412 generating directives 1434, which are sent to directional control module 1416. Based on directives 1434, directional control module 1416 generates configuration parameters 1442, which are sent to antenna module 1402.

Configuration parameters 1442 may specify particular parameters to be applied to each antenna and/or radiating element within antenna module 1402. Examples of such parameters include (but are not limited to) amplification gains, attenuation factors, and/or phase shift values.

Access module 1407 performs operations in accordance with the access techniques described herein. For instance, access module 1407 may perform such techniques when host module 1406 indicates that it has data to send to multiple destination devices. As shown in **FIG. 14****,** access module 1407 includes a selection module 1414, an exchange module 1419, and a decision module 1417.

Selection module 1414 may select one or more destination devices in accordance with the techniques described. Based on this, exchange module 1419 may generate exchange messages (e.g., RTS frames, QoS-Null frames, etc.) seeking responses from one or more selected destination devices. Such messages may be transmitted via transceiver module 1404 and antenna module 1402. Also, exchange module 1419 may receive corresponding responses via transceiver module 1404 and antenna module 1402.

Based on any responses received by exchange module 1419, decision module 1417 chooses whether to send a data transmission, or to initiate a backoff interval. Such choices may be made in accordance with the techniques described herein. Moreover, decision module 1417 may indicate such choices to host module 1406. In turn, host module 1406 may operate accordingly (e.g., generate a transmission or wait).

**FIG. 15** **is** a diagram showing an exemplary implementation of antenna module 1402. As shown in **FIG. 15****,** this implementation includes multiple radiating elements 1502a-n, multiple processing nodes 1504a-n, a splitter module 1506, a combiner module 1507, and an interface module 1508. These elements may be implemented in hardware, software, or any combination thereof.

Each radiating element 1502 may be a distinct antenna. Alternatively or additionally, each radiating element 1502 may be a radiating element within a phased-array or switched-beam antenna. Thus, together, radiating elements 1502a-n may form any combination of one or more distinct antennas, one or more phased arrays, and/or one or more switched beam antennas. As shown in **FIG. 15****,** radiating elements 1502a-n are each coupled to a corresponding one of processing nodes 1504a-n.

As shown in **FIG. 15****,** splitter module 1506 receives signal 1422 (which is generated by transceiver module 1404 of **FIG. 14**). Upon receipt, splitter module 1506 "splits" signal 1422 into substantially identical input signals 1520a-n. This splitting may occur with some degree of insertion loss. Also, splitter module 1506 may perform operations, such as amplification and/or filtering. Input signals 1520a-n are sent to processing nodes 1504a-n, respectively.

Processing nodes 1504a-n generate processed signals 1522a-n from input signals 1520a-n, respectively. In turn, processed signals 1522a-n are sent to radiating elements 1502a-n, respectively. Conversely, processing nodes 1504a-n may generate processed signals 1523a-n from wireless signals received by elements 1502a-n. These signals may be combined by combiner module 1507 into receive signals 1424.

In generating processed signals 1522a-n and 1523a-n, processing nodes 1504a-n may perform various operations. Examples of such operations performed by processing nodes 1504a-n include (but are not limited to) attenuation, amplification, and/or phase shifting. Switching is a further exemplary operation. For example, one or more of processing nodes 1504a-n may selectively pass or block their corresponding signals.

The manner in which processing nodes 1504a-n generate processed signals 1522an and 1523a-n is determined by control signals 1524a-n, respectively. Thus, these signals may convey attenuation factors, amplification gains, phase shift values, switching directives, and so forth.

In embodiments, control signals 1524a-n are included in configuration parameters 1442, which are received by interface module 1508. These parameters may be received in various formats (e.g., analog, digital, serial, parallel, etc.). Interface module 1508 extracts these parameters and formats them as control signals 1524a-n. As described above, control signals 1524a-n are sent to processing nodes 1504a-n, respectively.

The implementation of **FIG. 15** is shown for purposes of illustration and not limitation. Accordingly, implementations of antenna module 1502 may include other elements. For example, implementations may include one or more amplifiers and/or filters. Such amplifier(s) and/or filters may be coupled between processing nodes 1504a-n and elements 1502a-n.

As described herein, various embodiments may be implemented using hardware elements, software elements, or any combination thereof. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth.

Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof.

Some embodiments may be implemented, for example, using a machine-readable medium or article which may store an instruction or a set of instructions that, if executed

by a machine, may cause the machine to perform a method and/or operations in accordance with the embodiments. Such a machine may include, for example, any suitable processing platform, computing platform, computing device, processing device, computing system, processing system, computer, processor, or the like, and may be implemented using any suitable combination of hardware and/or software.

The machine-readable medium or article may include, for example, any suitable type of memory unit, memory device, memory article, memory medium, storage device, storage article, storage medium and/or storage unit, for example, memory, removable or non-removable media, erasable or non-erasable media, writeable or re-writeable media, digital or analog media, hard disk, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

While various embodiments of the present invention have been described above, it should be understood that they have been presented by way of example only, and not in limitation. For instance, the techniques described herein are not limited to downlink communications. Moreover, the techniques described herein are not limited to communications between APs and STAs.

Accordingly, it will be apparent to persons skilled in the relevant art that various changes in form and detail can be made therein without departing from the scope of the invention which is defined by the claims.

## Claims

1. A method, carried out by a wireless communication apparatus comprising:
selecting one or more destination devices of a plurality of destination devices (104a, 104b, 104c);
initiating an exchange with the one or more destination devices, initiating including sending a message to the one or more destination devices;
flagging any destination device of the one or more destination devices for which an expected response to the message is not received;
based on an outcome of the exchange, choosing between:
sending a multiple-user multiple-input multiple-output, MU-MIMO, wireless data transmission to the plurality of destination devices, and
initiating a backoff interval;
wherein when the outcome of the exchange comprises receiving a response from at least one of the one or more destination devices, choosing to send the MU-MIMO wireless data transmission and otherwise initiating the backoff interval; and
subsequently selecting the flagged destination device or flagged destination devices to initiate exchanges with said flagged destination device or flagged destination devices.

2. The method of claim 1, wherein one flagged previously unresponsive destination device is selected.

3. The method of claim 1, wherein the MU-MIMO wireless data transmission includes data for at least one of the one or more destination devices.

4. The method of any preceding claim, wherein:
when said initiating an exchange results in a failure to receive a response from a first destination device of the one or more selected destination devices, said choosing comprises choosing to send the MU-MIMO wireless data transmission to the plurality of destination devices including the one or more destination devices, and
wherein the MU-MIMO wireless data transmission omits data for the first destination device.

5. The method of any of claims 1 to 4, wherein:
the outcome of the exchange is a failure to receive a response message from a destination device of the one or more destination devices, and said choosing is choosing to initiate the backoff interval.

6. The method of any preceding claim, wherein said sending a message comprises at least one of:
(i) sending a request to send, RTS, frame to the one or more destination devices or (ii) sending a Quality of Service, QoS, Null frame to the one or more destination devices and awaiting an acknowledgment, ACK, frame from the one or more destination devices.

7. The method of any of claims 1 to 3, wherein the backoff interval is an exponential backoff interval.

8. The method of any of claims 1 to 3, wherein the MU-MIMO wireless data transmission is a space division multiple access, SDMA, transmission.

9. A wireless communication apparatus, comprising:
a selection module to select one or more destination devices of a plurality of destination devices (104a, 104b, 104c);
a transceiver module configured to:
send a message to the one or more destination devices, and
receive a response message, from at least one of the one or more destination devices, in response to sending the message;
a decision module configured to, choose between:
sending a multiple-user multiple-input multiple-output, (̵MU-MIMO)̵, wireless data transmission to the plurality of destination devices in response to receiving the response message from the at least one of the one or more destination devices, and
initiating a backoff interval;
wherein the decision module is configured to choose sending the wireless data transmission when receiving a response message in response to at least one of the messages, and to otherwise choose initiation of the backoff interval;
the apparatus further configured to:
flag any destination device of the one or more destination devices for which the expected response to the message is not received; and
subsequently select the flagged destination device or flagged destination devices to initiate exchanges with said flagged destination device or flagged destination devices.

10. The apparatus of claim 9, wherein the selection module is arranged to select one flagged previously unresponsive destination device.

11. The apparatus of claim 9, wherein the MU-MIMO wireless data transmission is a space division multiple access, SDMA, transmission.

12. A computer program product comprising a machine-accessible medium having stored thereon instructions that, when executed by a machine of a wireless communication apparatus cause said apparatus to:
select one or more of a plurality of destination devices (104a, 104b, 104c);
initiate an exchange with the one or more destination devices, wherein to initiate includes a cause to send a message to the one or more destination devices;
flag any destination device of the one or more destination devices for which an expected response to the message is not received;
based on an outcome of the exchange,
choose between to:
send a multiple-user multiple-input multiple-output, MU-MIMO, wireless data transmission to the plurality of destination devices, and
initiate a backoff interval; and
subsequently select the flagged destination device or flagged destination devices to initiate exchanges with said flagged destination device or flagged destination devices; wherein when the outcome of the exchange comprises receiving a response from at least one of the one or more destination devices, choosing to send the MU-MIMO wireless data transmission and otherwise choosing to initiate the backoff interval.

13. The computer program product of claim 12, further comprising instructions to select one flagged previously unresponsive destination device.

## Patentansprüche

1. Verfahren, das von einer Drahtloskommunikationsvorrichtung ausgeführt wird, wobei es umfasst:
Auswählen eines oder mehrerer Zielgeräte einer Mehrzahl von Zielgeräten (104a, 104b, 104c);
Initiieren eines Austausches mit dem einen oder den mehreren Zielgeräten, wobei das Initiieren das Senden einer Nachricht an das eine oder die mehreren Zielgeräte umfasst;
Kennzeichnen eines jeglichen Zielgeräts des einen oder der mehreren Zielgeräte, für das eine erwartete Antwort auf die Nachricht nicht empfangen wird;
auf Grundlage eines Resultats des Austausches Wählen zwischen:
dem Senden einer MU-MIMO(Multiple-User Multiple-Input Multiple-Output)-Drahtlosdatenübertragung an die Mehrzahl von Zielgeräten und
dem Initiieren eines Backoff-Intervalls;
wobei, wenn das Resultat des Austausches das Empfangen einer Antwort von mindestens einem des einen oder der mehreren Zielgeräte umfasst, gewählt wird, die MU-MIMO-Drahtlosdatenübertragung zu senden, und ansonsten das Initiieren des Backoff-Intervalls; und
anschließendes Auswählen des gekennzeichneten Zielgeräts oder gekennzeichneter Zielgeräte, um Austausche mit dem gekennzeichneten Zielgerät oder gekennzeichneten Zielgeräten zu initiieren.

2. Verfahren nach Anspruch 1, wobei ein gekennzeichnetes zuvor nicht reagierendes Zielgerät ausgewählt wird.

3. Verfahren nach Anspruch 1, wobei die MU-MIMO-Drahtlosdatenübertragung Daten für mindestens eines des einen oder der mehreren Zielgeräte enthält.

4. Verfahren nach einem vorhergehenden Anspruch, wobei:
wenn das Initiieren eines Austausches zu einem Fehlschlagen führt, eine Antwort von einem ersten Zielgerät des einen oder der mehreren ausgewählten Zielgeräte zu empfangen, das Wählen ein Wählen umfasst, die MU-MIMO-Drahtlosdatenübertragung an die Mehrzahl von Zielgeräten zu senden, die das eine oder die mehreren Zielgeräte enthält, und
wobei die MU-MIMO-Drahtlosdatenübertragung Daten für das erste Zielgerät auslässt.

5. Verfahren nach einem der Ansprüche 1 bis 4, wobei:
das Resultat des Austausches ein Fehlschlagen ist, eine Antwortnachricht von einem Zielgerät des einen oder der mehreren Zielgeräte zu empfangen, und das Wählen ein Wählen ist, das Backoff-Intervall zu initiieren.

6. Verfahren nach einem vorhergehenden Anspruch, wobei das Senden einer Nachricht mindestens eines umfasst von:
(i) Senden eines RTS(Request To Send)-Frames an das eine oder die mehreren Zielgeräte oder (ii) Senden eines QoS(Quality of Service)-Null-Frames an das eine oder die mehreren Zielgeräte und Abwarten eines ACK(Acknowledgment)-Frames von dem einen oder den mehreren Zielgeräten.

7. Verfahren nach einem der Ansprüche 1 bis 3, wobei das Backoff-Intervall ein Exponential-Backoff-Intervall ist.

8. Verfahren nach einem der Ansprüche 1 bis 3, wobei die MU-MIMO-Drahtlosdatenübertragung eine SDMA(Space Division Multiple Access)-Übertragung ist.

9. Drahtloskommunikationsvorrichtung, die aufweist:
ein Auswahlmodul, um ein oder mehrere Zielgeräte einer Mehrzahl von Zielgeräten (104a, 104b, 104c) auszuwählen;
ein Sende-Empfänger-Modul, das dazu ausgebildet ist:
eine Nachricht an das eine oder die mehreren Zielgeräte zu senden und
eine Antwortnachricht von mindestens einem des einen oder der mehreren Zielgeräte als Reaktion auf das Senden der Nachricht zu empfangen;
ein Entscheidungsmodul, das dazu ausgebildet ist, zu wählen zwischen:
dem Senden einer MU-MIMO(Multiple-User Multiple-Input Multiple-Output)-Drahtlosdatenübertragung an die Mehrzahl von Zielgeräten als Reaktion auf das Empfangen der Antwortnachricht von dem mindestens einen des einen oder der mehreren Zielgeräte und
dem Initiieren eines Backoff-Intervalls;
wobei das Entscheidungsmodul dazu ausgebildet ist, das Senden der Drahtlosdatenübertragung zu wählen, wenn eine Antwortnachricht als Reaktion auf mindestens eine der Nachrichten empfangen wird, und ansonsten die Initiierung des Backoff-Intervalls zu wählen;
wobei die Vorrichtung ferner dazu ausgebildet ist:
ein jegliches Zielgerät des einen oder der mehreren Zielgeräte, für das die erwartete Antwort auf die Nachricht nicht empfangen wird, zu kennzeichnen; und
anschließend das gekennzeichnete Zielgerät oder gekennzeichnete Zielgeräte auszuwählen, um Austausche mit dem gekennzeichneten Zielgerät oder gekennzeichneten Zielgeräten zu initiieren.

10. Vorrichtung nach Anspruch 9, wobei es das Auswahlmodul vermag, ein gekennzeichnetes zuvor nicht reagierendes Zielgerät auszuwählen.

11. Vorrichtung nach Anspruch 9, wobei die MU-MIMO-Drahtlosdatenübertragung eine SDMA(Space Division Multiple Access)-Übertragung ist.

12. Computerprogrammprodukt, das ein maschinenzugängliches Medium aufweist mit darauf gespeicherten Anweisungen, die bei Ausführung durch eine Maschine einer Drahtloskommunikationsvorrichtung bewirken, dass die Vorrichtung:
eines oder mehrere einer Mehrzahl von Zielgeräten (104a, 104b, 104c) auswählt;
einen Austausch mit dem einen oder den mehreren Zielgeräten initiiert, wobei initiieren ein Veranlassen umfasst, eine Nachricht an das eine oder die mehreren Zielgeräte zu senden;
ein jegliches Zielgerät des einen oder der mehreren Zielgeräte, für das eine erwartete Antwort auf die Nachricht nicht empfangen wird, kennzeichnet;
auf Grundlage eines Resultats des Austausches dazwischen wählt:
eine MU-MIMO(Multiple-User Multiple-Input Multiple-Output)-Drahtlosdatenübertragung an die Mehrzahl von Zielgeräten zu senden und
ein Backoff-Intervall zu initiieren; und
anschließend das gekennzeichnete Zielgerät oder gekennzeichnete Zielgeräte auswählt, um Austausche mit dem gekennzeichneten Zielgerät oder gekennzeichneten Zielgeräten zu initiieren;
wobei, wenn das Resultat des Austausches das Empfangen einer Antwort von mindestens einem des einen oder der mehreren Zielgeräte umfasst, gewählt wird, die MU-MIMO-Drahtlosdatenübertragung zu senden, und ansonsten gewählt wird, das Backoff-Intervall zu initiieren.

13. Computerprogrammprodukt nach Anspruch 12, das ferner Anweisungen aufweist, um ein gekennzeichnetes zuvor nicht reagierendes Zielgerät auszuwählen.

## Revendications

1. Procédé exécuté par un appareil de communication sans fil, comprenant :
la sélection d'un ou plusieurs dispositifs de destination parmi pluralité de dispositifs de destination (104a, 104b, 104c) ;
le déclenchement d'un échange avec le ou les dispositifs de destination, le déclenchement incluant l'envoi d'un message à ce ou à ces dispositifs de destination ;
le repérage de tout dispositif de destination pour lequel une réponse attendue au message n'a pas été reçue parmi le ou les dispositifs de destination ;
sur la base du résultat de l'échange, le choix opéré entre :
l'envoi d'une transmission de données sans fil à entrées et sorties multiples et utilisateurs multiples, MU-MIMO, à la pluralité de dispositifs de destination, et
le déclenchement d'un intervalle de temporisation ;
dans lequel, lorsque le résultat de l'échange comprend la réception d'une réponse en provenance d'au moins l'un du ou des dispositifs de destination, le choix d'envoyer la transmission de données sans fil MU-MIMO, et sinon le déclenchement de l'intervalle de temporisation ; et
à la suite de cela, la sélection du dispositif de destination repéré ou des dispositifs de destination repérés pour initier des échanges avec ledit dispositif de destination repéré ou lesdits dispositifs de destination repérés.

2. Procédé selon la revendication 1, dans lequel est sélectionné un dispositif de destination repéré et précédemment sans réponse.

3. Procédé selon la revendication 1, dans lequel la transmission de données sans fil MU-MIMO inclut des données concernant au moins l'un du ou des dispositifs de destination.

4. Procédé selon l'une quelconque des revendications précédentes, dans lequel :
lorsque ledit déclenchement d'un échange a pour résultat une défaillance de réception de réponse en provenance d'un premier dispositif de destination parmi le ou les dispositifs de destination sélectionnés, ledit choix comprend le choix de l'envoi de la transmission de données sans fil MU-MIMO à la pluralité de dispositifs de destination incluant le ou les dispositifs de destination, et
dans lequel la transmission de données sans fil MU-MIMO omet des données pour le premier dispositif de destination.

5. Procédé selon l'une quelconque des revendications 1 à 4, dans lequel :
le résultat de l'échange représente une défaillance de réception d'un message de réponse en provenance d'un dispositif de destination parmi le ou les dispositifs de destination, et ledit choix est le choix du déclenchement de l'intervalle de temporisation.

6. Procédé selon l'une quelconque des revendications précédentes, dans lequel ledit envoi d'un message comprend au moins une action parmi :
(i) l'envoi d'une trame de demande d'envoi, RTS, à ce ou à ces dispositifs de destination, ou (ii) l'envoi d'une trame vide de qualité de service, QoS, à ce ou à ces dispositifs de destination et l'attente d'une trame d'accusé de réception, ACK, en provenance du ou des dispositifs de destination.

7. Procédé selon l'une quelconque des revendications 1 à 3, dans lequel l'intervalle de temporisation est un intervalle de temporisation exponentiel.

8. Procédé selon l'une quelconque des revendications 1 à 3, dans lequel la transmission de données sans fil MU-MIMO et une transmission à accès multiple par répartition dans l'espace, SDMA.

9. Appareil de communication sans fil comprenant :
un module de sélection destiné à sélectionner un ou plusieurs dispositifs de destination parmi une pluralité de dispositifs de destination (104a, 104b, 104c) ;
un module émetteur récepteur configuré pour :
envoyer un message à ce ou à ces dispositifs de destination, et
recevoir un message de réponse en provenance d'au moins l'un du ou des dispositifs de destination en réponse à l'envoi du message ;
un module de décision configuré pour opérer un choix entre :
l'envoi d'une transmission de données sans fil à entrées et sorties multiples et utilisateurs multiples, MU-MIMO, à la pluralité de dispositifs de destination en réponse à la réception du message de réponse depuis le ou les dispositifs parmi le ou les dispositifs de destination, et
le déclenchement d'un intervalle de temporisation ;
dans lequel, le module de décision est configuré pour choisir l'envoi de la transmission de données sans fil lors de la réception d'un message de réponse en réponse à au moins l'un des messages et pour choisir sinon le déclenchement de l'intervalle de temporisation ;
l'appareil est en outre configuré pour :
repérer tout dispositif de destination parmi le ou les dispositifs de destination pour lequel aucune réponse attendue au message n'a été reçue ; et
sélectionner, à la suite de cela, le dispositif de destination repéré ou les dispositifs de destination repérés pour initier des échanges avec ledit dispositif de destination repéré ou lesdits dispositifs de destination repérés.

10. Appareil selon la revendication 9, dans lequel le module de sélection est agencé pour sélectionner un dispositif de destination repéré et précédemment sans réponse.

11. Appareil selon la revendication 9, dans lequel la transmission de données sans fil MU-MIMO est une transmission à accès multiple par répartition dans l'espace, SDMA.

12. Produit de programme informatique comprenant un support accessible par machine comportant des instructions stockées qui, lorsqu'elles sont exécutées par une machine d'appareil de communication sans fil avec ledit appareil à :
sélectionner un ou plusieurs dispositifs parmi une pluralité de dispositifs de destination (104a, 104b, 104c) ;
déclencher un échange avec le ou les dispositifs de destination, le déclenchement incluant une cause de l'envoi d'un message à ce ou à ces dispositifs de destination ;
repérer tout dispositif de destination parmi le ou les dispositifs de destination pour lequel aucune réponse attendue au message n'a été reçue ;
sur la base du résultat de l'échange,
choisir entre :
envoyer une transmission de données sans fil à entrées et sorties multiples et utilisateurs multiples, MU-MIMO, à la pluralité de dispositifs de destination, et
déclencher un intervalle de temporisation ; et
sélectionner, à la suite de cela, le dispositif de destination repéré ou les dispositifs de destination repérés pour initier des échanges avec ledit dispositif de destination repéré ou lesdits dispositifs de destination repérés ;
dans lequel, lorsque le résultat de l'échange comprend la réception d'une réponse en provenance d'au moins un parmi le ou les dispositifs de destination, il y a lieu de choisir l'envoi de la transmission de données sans fil MU-MIMO et sinon de choisir le déclenchement de l'intervalle de temporisation.

13. Produit de programme informatique selon la revendication 12, comprenant en outre des instructions permettant de sélectionner un dispositif de destination repéré et précédemment sans réponse.
